# EUROPÄISCHE PATENTSCHRIFT

(11) **EP 2 721 661 B1**
(45) Veröffentlichungstag und Bekanntmachung des Hinweises auf die Patenterteilung: **18.05.2016**
(21) Anmeldenummer: 12725753.3
(22) Anmeldetag: 04.06.2012
(51) Int. Cl.: H01M 2/10, H01M 2/32, B01D 53/04, B01D 53/26

(54) **TROCKNUNGSEINRICHTUNG SOWIE BATTERIESYSTEM UND KRAFTFAHRZEUG MIT DIESER TROCKNUNGSEINRICHTUNG**
DRYING DEVICE AND BATTERY SYSTEM AND MOTOR VEHICLE HAVING SAID DRYING DEVICE
DISPOSITIF DE SÉCHAGE AINSI QUE SYSTÈME DE BATTERIE ET VÉHICULE À MOTEUR POURVUS DE CE DISPOSITIF DE SÉCHAGE

(30) Priorität: 14.06.2011 DE 102011077489
(43) Veröffentlichungstag der Anmeldung: 23.04.2014
(73) Patentinhaber: Samsung SDI Co., Ltd., Yongin-si, Gyeonggi-do 446-577 (KR); Robert Bosch GmbH, 70442 Stuttgart (DE)
(72) Erfinder: GLESS, Michael, 70437 Stuttgart-Zazenhausen (DE)
(74) Vertreter: Bee, Joachim
(86) Internationale Anmeldenummer: PCT/EP2012/060493
(87) Internationale Veröffentlichungsnummer: WO 2012/171822

(56) Entgegenhaltungen:
- EP-A1- 0 831 033
- DE-A1- 10 261 873
- DE-A1-102008 034 698
- DE-A1-102009 034 959

## Beschreibung

Die vorliegende Erfindung betrifft eine Trocknungseinrichtung zur Minderung einer Feuchtigkeit eines in einem Innenraum eines Gehäuses befindlichen Gases, mit einer Trockenmittel aufweisenden Trockenmittelpatrone. Zudem werden ein Batteriesystem und ein Kraftfahrzeug mit dieser Trocknungseinrichtung bereitgestellt.

### Stand der Technik

Um die Sicherheit von Batteriesystemen, insbesondere Lithium-Ionen-Batteriesystemen, zu gewährleisten sowie zur Optimierung der Energie- und Leistungsparameter als auch der Lebensdauer sind die Batteriezellen des Batteriesystems bevorzugt innerhalb eines definierten Temperaturbereiches zu betreiben. Insbesondere bei hoher Leistungsaufnahme beziehungsweise Leistungsabgabe muss ein Aufheizen der Batteriezellen über eine bestimmte Betriebstemperatur vermieden werden und betriebsbedingt auftretende Wärme abgeführt werden. Zu diesem Zweck werden üblicherweise Kühlsysteme eingesetzt.

Außerdem kann es erforderlich sein, zu kühle Batteriezellen auf eine gewünschte Betriebstemperatur zu erwärmen. Auch zu diesem Zweck wird ein Temperierungssystem eingesetzt. Zur Realisierung der gewünschten Betriebstemperatur ist somit vorzugsweise eine Anlage zu verwenden, mittels derer Wärme zugeführt sowie auch Wärme abgeführt werden kann.

Zur Kühlung der Batteriezellen wird üblicherweise Luft oder Wasser als Medium eingesetzt, wobei das jeweilige Medium die Wärme aufnimmt und aus den Zellen abführt. Wässrige Kühlmedien werden oftmals durch eine Bodenplatte geleitet, die thermisch zum Beispiel über Bleche mit den Batteriezellen verbunden ist. Bei Nutzung von Luft als Kühlmedium wird diese zwischen den Zellen hindurchgeführt. Insbesondere bei der Luftkühlung ist ein relativ hoher Aufwand zur Aufbereitung hinsichtlich Entfeuchtung und Filterung der Kühlluft sowie der Strömungsführung durch das Gehäuse zu den Batteriezellen notwendig. Bei einem wassergekühlten Batteriesystem tritt insbesondere das Problem der Kondenswasserbildung innerhalb des Gehäuses auf.

Zur Verminderung von im Gehäuse anfallender Feuchtigkeit beziehungsweise Kondenswasser ist es bekannt, die im Gehäuse befindliche Luft mittels Trockenmittel zu trocknen.

Dazu sind entsprechende Vorkehrungen zu treffen, wie zum Beispiel die Positionierung des Trockenmittels im Gehäuse an geeigneter Stelle. Die nicht veröffentlichte Anmeldung DE 10 2010 028 861 zeigt dazu eine Trocknungseinrichtung in einem Gehäuseinnenraum, insbesondere in einem Batteriegehäuseinnenraum, wobei die Trocknungseinrichtung einen Trockenmittelkörper sowie eine Fixierungseinrichtung zur form- und/oder kraftschlüssigen Fixierung des Trockenmittelkörpers umfasst, mittels derer der Trockenmittelkörper im Gehäuseinnenraum oder zumindest einen Teil der inneren Oberfläche des Gehäuses ausbildend positionierbar ist.

Die DE 10 2008 034 698 A1 zeigt eine Batterie mit einem Batteriegehäuse und einem Feuchtigkeit sorbierenden Element. Dieses Element ist mittels einer lösbaren kraft- und/oder formschlüssigen Verbindung in ein Inneres des Batteriegehäuses ragend und an diesem befestigt. Die EP 0831 033 A1 offenbart eine Trockenmittelverpackung aus Folienlaminaten.

### Offenbarung der Erfindung

Erfindungsgemäß wird eine Trocknungseinrichtung zur Verfügung gestellt, welche zur Minderung einer Feuchtigkeit eines in einem Innenraum eines Gehäuses befindlichen Gases eine Trockenmittel aufweisende Trockenmittelpatrone umfasst. Dabei weist die Trocknungseinrichtung eine ins Gehäuse eingebrachte oder einbringbare vom Innenraum separierte und flüssigkeitsdicht und gasleitend mit dem Innenraum verbundene Schutzkammer auf, in der die Trockenmittelpatrone angeordnet ist.

Hiermit ist es vorteilhaft ermöglicht, das Trockenmittel unter Beibehaltung der Dichtheit oder der Schutzklasse (Schutz gegen elektrischen Schlag) des Gehäuses auszutauschen, da mit einem Entfernen der Trockenmittelpatrone lediglich die Sicherheitskammer von der Umgebung her zugänglich ist, nicht aber der eigentliche Innenraum des Gehäuses. Damit ist vorteilhaft ein Eindringen von Fremdkörpern in den Innenraum des Gehäuses nicht möglich. So kann ein Kontakt zu Bauteilen im Innenraum des Gehäuses vermieden werden.

Ein Austausch des Trockenmittels kann vergleichsweise risikofrei erfolgen. Der geschlossene und berührungsgeschützte Innenraum des Gehäuses bleibt auch während eines Austauschs der Trockenmittelpatrone erhalten. Besonders vorteilhaft erweist sich diese Eigenschaft bei Batteriesystemen mit spannungsführenden Bauteilen im Innenraum des Gehäuses.

Bisher war es üblich, die Menge an Trockenmittel in Trocknungseinrichtungen in einer Überdosierung vorzuhalten, da es zu einem Austausch des Trockenmittels eines speziell geschulten Personals bedurfte, wodurch die Serviceintervalle weit auseinanderliegen konnten. Mit der erfindungsgemäßen Trocknungseinrichtung ist eine einfache und risikofreie Austauschbarkeit des Trockenmittels gewährleistet. Speziell geschultes Personal ist nicht von Nöten. Daher ist es mit der erfindungsgemäßen Trocknungseinrichtung vorteilhaft möglich, eine geringere Menge als bisher üblich an Trockenmittel in der Trocknungseinrichtung zu verwenden. Dadurch können Gewicht und Kosten gesenkt werden. Zudem kann die austauschbare Menge an Trockenmittel variiert werden und den jeweiligen Bedürfnissen entsprechend des Einsatzgebietes leicht angepasst werden.

In einer bevorzugten Ausgestaltung der erfindungsgemäßen Trocknungseinrichtung ist vorgesehen, dass die Schutzkammer ein Druckausgleichselement umfasst, insbesondere ein Druckausgleichelement mit einer wasserdichten und atmungsaktiven Membran.

Druckausgleichselemente sind Standardbauteile. Mit der Anordnung des Druckausgleichselements in der Trocknungseinrichtung ist es vorteilhaft ermöglicht, einfach und kostengünstig einen Druckausgleich zwischen Innenraum und Schutzkammer erzeugen zu können.

In einer weiteren bevorzugten Ausgestaltung der erfindungsgemäßen Trocknungseinrichtung ist vorgesehen, dass eine im Gehäuse an einer Gehäuseaußenwand angeordnete Schutzabdeckung und die Gehäuseaußenwand die Schutzkammer bilden und das Druckausgleichselement in der Schutzabdeckung angeordnet ist.

Die Schutzkammer der Trocknungseinrichtung ist in dieser Ausgestaltung zum Teil von der Gehäuseaußenwand gebildet. Damit ist es für diesen Teil nicht notwendig, zusätzliches Material für die Erzeugung der Schutzkammer zu verwenden. So können vorteilhaft Material und Gewicht eingespart werden.

Alternativ ist in einer anderen bevorzugten Ausgestaltung der erfindungsgemäßen Trocknungseinrichtung vorgesehen, dass eine durch eine Gehäuseöffnung einer Gehäuseaußenwand in das Gehäuse eingebrachte oder einbringbare Schutzhülse die Schutzkammer bildet und das Druckausgleichselement in der Schutzhülse angeordnet ist. Insbesondere ist hierbei vorgesehen, dass die Schutzhülse ein Außengewinde aufweist und in das Gehäuse einschraubbar ist.

Hiermit ist es vorteilhaft ermöglicht, sämtliche Gehäuse mit der erfindungsgemäßen Trocknungseinrichtung nachrüsten zu können. Die Schutzhülse ist dazu lediglich an geeigneter Stelle in das Gehäuse einzubringen. Mit dem Außengewinde lässt sich die Schutzhülse vorteilhaft schnell und fest fixieren.

In einer weiteren bevorzugten Ausgestaltung der erfindungsgemäßen Trocknungseinrichtung ist vorgesehen, dass die Trocknungseinrichtung eine Sensoreinheit zur Ermittlung einer Aufnahmekapazität des Trockenmittels aufweist. Dabei umfasst die Sensoreinheit bevorzugt eine in Abhängigkeit der Aufnahmekapazität des Trockenmittels variable Erscheinung aufweisende Anzeige. Insbesondere umfasst die Sensoreinheit einen elektronischen Sensor, der mit einem elektronischen Managementsystem, beispielsweise einem Batteriemanagementsystem verbindbar ist.

Hiermit kann vorteilhaft der Sättigungsgrad beziehungsweise die Aufnahmekapazität des Trockenmittels überwacht und ein notwendiger Austausch der Trockenmittelpatrone rechtzeitig angekündigt werden. Zudem können Fehler oder Beschädigungen zum Beispiel des Schutzgehäuses, die zu einem Flüssigkeitseintrag in das geschlossene Batteriesystem führen können, erkannt werden und vor dem Eintreten kritischer Zustände rechtzeitig angekündigt werden.

Die erfindungsgemäße Trocknungseinrichtung ist in allen genannten Ausgestaltungen bevorzugt in einem Batteriesystem integriert. Das erfindungsgemäße Batteriesystem weist dazu ein Gehäuse und einen vom Gehäuse im Wesentlichen eingeschlossenen Innenraum auf. Die Trocknungseinrichtung ist hierbei in das Gehäuse eingebracht. Das Batteriesystem weist bevorzugt Lithium-Ionen-Zellen als Batteriezellen auf.

Gerade in Batteriesystemen erlangen die Vorteile der erfindungsgemäßen Trocknungseinrichtung Bedeutung, da hier im Innenraum des Gehäuses feuchtigkeitssensible, spannungsführende Bauteile angeordnet sind.

Erfindungsgemäß wird weiterhin ein Kraftfahrzeug bereitgestellt mit dem erfindungsgemäßen Batteriesystem in den zuvor genannten Ausgestaltungen, wobei das Batteriesystem mit einem Antriebssystem des Kraftfahrzeugs verbunden ist. Die Vorteile des erfindungsgemäßen Batteriesystems als Bauteil kommen so auch dem Kraftfahrzeug als Baugruppe zugute.

Vorteilhafte Weiterbildungen der Erfindung sind in den Unteransprüchen angegeben und in der Beschreibung ausgeführt.

Der Begriff Batteriesystem schließt in dieser Anmeldung auch Batterien, Batteriemodule, sonstige Batterieuntereinheiten, Akkumulatoren, Akkumulatorbatterien, Akkumulatorsysteme, insbesondere Lithium-Ionen-Systeme oder Lithium-Polymer-Ionen-Systeme mit ein.

### Zeichnungen

Die vorliegende Erfindung wird anhand der Zeichnungen und der nachfolgenden Beschreibung näher erläutert. Es zeigen:
Figur 1 eine erfindungsgemäße Trocknungseinrichtung in einer ersten Ausführung in einer Vorderansicht,
Figur 2 die erfindungsgemäße Trocknungseinrichtung in der ersten Ausführung in einer Seitenansicht,
Figur 3 eine erfindungsgemäße Trocknungseinrichtung in einer zweiten Ausführung in einer Seitenansicht, und
Figur 4 ein erfindungsgemäßes Batteriesystem mit der Trocknungseinrichtung.

### Ausführungsformen der Erfindung

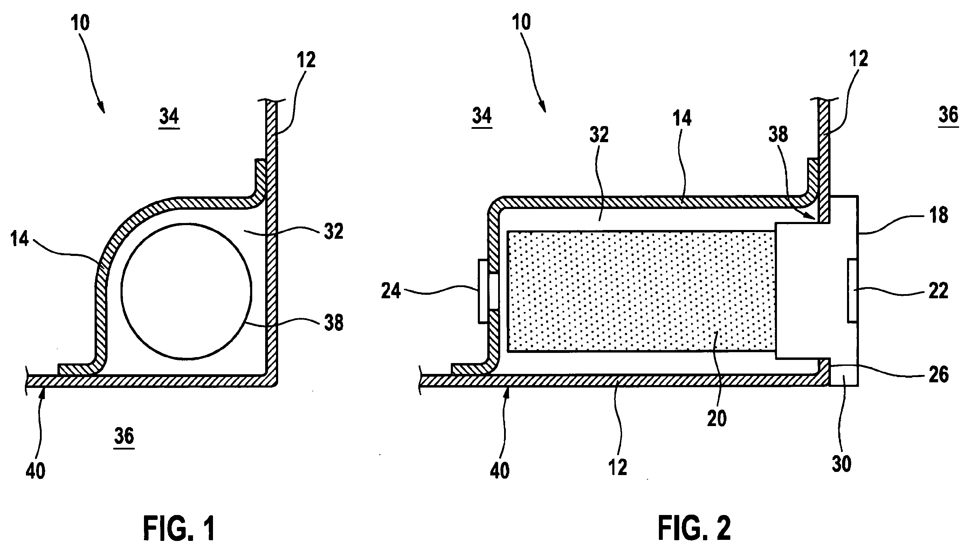

Die Figuren 1 und 2 zeigen beispielhaft und nicht beschränkend in skizzenhaften Schnittdarstellungen eine erfindungsgemäße Trocknungseinrichtung 10 in einer ersten Ausführung, in Figur 1 in einer Vorderansicht und in Figur 2 in einer Seitenansicht.

Die Trocknungseinrichtung 10 ist dabei in einem Gehäuse 40 beherbergt. Das Gehäuse 40 weist eine einen Innenraum 34 von einer Umgebung 36 abgrenzende Gehäuseaußenwand 12 auf. Im Wesentlichen umschließt die Gehäuseaußenwand 12 den Innenraum 34 und dichtet diesen zur Umgebung 36 ab. Erfindungsgemäß ist dieses Gehäuse 40 bevorzugt das Gehäuse 40 eines Batteriesystems 42, insbesondere eines Lithium-Ionen-Batteriesystems.

Die Trocknungseinrichtung 10 umfasst hierbei eine Schutzkammer 32, welche einen vom Innenraum 34 separierten Raum bildet. Die Schutzkammer 32 ist mit dem Innenraum 34 gasdurchlässig und flüssigkeitsdicht verbunden. In der ersten beispielhaften Ausgestaltungsvariante, gezeigt in den Figuren 1 und 2, ist die Schutzkammer 32 durch eine Schutzabdeckung 14 gebildet, welche die Schutzkammer 32 zumindest in Teilen umschließt. Die Schutzabdeckung 14 ist an der zum Innenraum 34 gerichteten Seite der Gehäuseaußenwand 12 angeordnet. Bevorzugt ist die Schutzabdeckung 14 mit der Gehäuseaußenwand 12 stoffschlüssig fest verbunden. Bevorzugt umschließt die Gehäuseaußenwand 12 ebenfalls zumindest einen Teil der Schutzkammer 32. So ist die Schutzkammer 32 zur Umgebung 36 durch die Gehäuseaußenwand 12 abgegrenzt. In der ersten Ausführungsvariante gemäß den Figuren 1 und 2 bietet es sich an, die Schutzkammer 32 an einer Kante des Gehäuses 40 vorzusehen.

Die Schutzkammer 32 und der Innenraum 34 sind erfindungsgemäß gasleitend bevorzugt mit einem Druckausgleichelement 24 miteinander verbunden, insbesondere mit einem Druckausgleichselement 24, welches eine wasserdichte und atmungsaktive Membran aufweist. In der ersten Ausgestaltungsvariante ist das Druckausgleichselement 24 in der Schutzabdeckung 14 angeordnet.

Druckausgleichselemente sind bekannt. Sie dienen einer Belüftung und Entlüftung von abgedichteten Gehäusen 40, um Druckdifferenzen zwischen dem vom Gehäuse 40 eingeschlossenen Innenraum 34 und der Umgebung 36 des Gehäuses 40 zu vermeiden und einer Kondensatbildung im Innenraum 34 vorzubeugen.

In der vorliegenden Erfindung findet der Druckausgleich nicht unmittelbar zwischen dem Innenraum 34 und der Umgebung 36 statt, sondern zum einen zwischen dem Innenraum 36 und der Schutzkammer 32 und zum anderen zwischen der Schutzkammer 32 und der Umgebung 36. Die Schutzkammer 32 ist dazu druckausgleichend sowohl mit dem Innenraum 34 als auch mit der Umgebung 36 verbunden.

In der Schutzkammer 32 ist erfindungsgemäß eine Trockenmittelpatrone 18 angeordnet, die ein Trockenmittel 20 enthält. Als Trockenmittel ist bevorzugt ein Kieselgel oder Kieselsäuregel (englisch Silica-gel) beziehungsweise ein Molekularsieb vorgesehen, vorzugsweise ausgebildet als Absorptionsmittel für Feuchtigkeit nach DIN 55473.

Die Trockenmittelpatrone 18 ist austauschbar angeordnet. Sie ist durch eine Gehäuseöffnung 38 in der Gehäuseaußenwand 12 in die Schutzkammer 32 einbringbar. Die Trockenmittelpatrone 18 weist wenigstens eine Atmungsöffnung 26 auf, welche bevorzugt hinter einem Kragen 30 angeordnet ist, um vor Eindringen von Staub und Feuchtigkeit geschützt zu sein. Durch diese wenigstens eine Atmungsöffnung 26 ist die Schutzkammer 32 druckausgleichend mit der Umgebung verbunden.

Passieren Luftströme die Sicherheitskammer 32, so durchdringen diese die Trockenmittelpatrone 18. In der Trockenmittelpatrone 18 ist ein Trockenmittel 20 angeordnet, welches der durchströmenden Luft Feuchtigkeitsanteile entzieht, indem es diese an sich bindet. Dabei wird sowohl aus der Umgebung 36 in den Innenraum 34 strömende Luft als auch von dem Innenraum 34 in die Umgebung 36 strömende Luft entfeuchtet beziehungsweise getrocknet.

Die erfindungsgemäße Trocknungseinrichtung 10 weist bevorzugt eine Sensoreinheit 22 zur Ermittlung einer Aufnahmekapazität des Trockenmittels 20 auf. Dabei verfügt die Sensoreinheit 22 bevorzugt über eine Anzeige, welche in Abhängigkeit der Aufnahmekapazität des Trockenmittels 20 eine variable Erscheinung aufweist. Beispielsweise ändert die Anzeige ihren Farbzustand. Darüber hinaus ist es vorgesehen, dass die Sensoreinheit 22 einen elektronischen Sensor umfasst, der mit einem elektronischen Managementsystem verbindbar ist. Bevorzugt ist dieses Managementsystem ein Batteriemanagementsystem eines Batteriesystems 42.

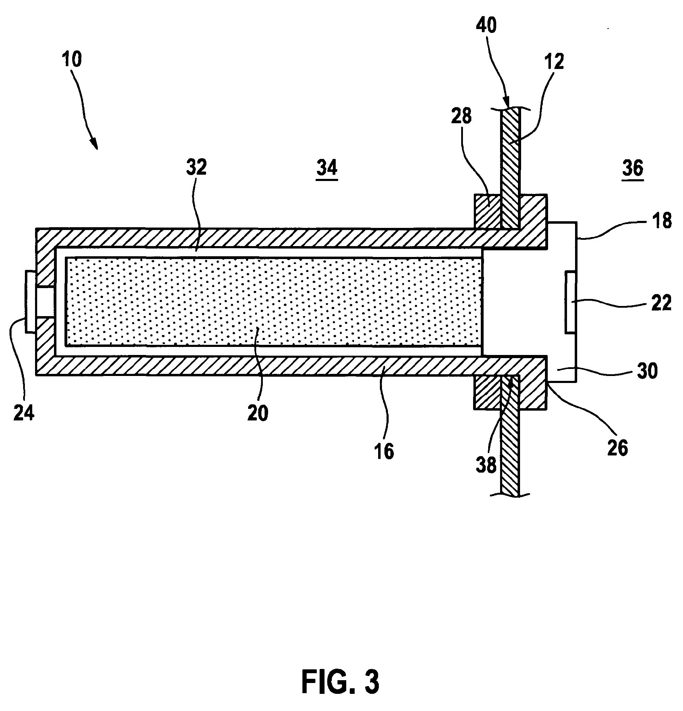

Figur 3 zeigt beispielhaft und nicht beschränkend in skizzenhafter Schnittdarstellung eine erfindungsgemäße Trocknungseinrichtung 10 in einer zweiten Ausführung in einer Seitenansicht.

Im Unterschied zur ersten Ausgestaltung ist die Schutzkammer 32 in dieser zweiten Ausgestaltung durch eine Schutzhülse 16 gebildet, welche die Schutzkammer 32 zumindest in Teilen umschließt. Die Schutzhülse 16 grenzt die Schutzkammer 32 zum Innenraum 34 ab. Die Schutzhülse 16 ist bevorzugt von der Umgebung 36 her in das Gehäuse 40 einbringbar, insbesondere einschraubbar. Dazu ist die Schutzhülse 16 bevorzugt mit einem Außengewinde versehen, welches mit einem entsprechenden Innengewinde in der Gehäuseöffnung 38 oder einer Dichtung 28 eine kraft- und reibschlüssige Verbindung herstellt. Alternativ sind auch Steckverbindungen oder stoffschlüssige Verbindungen möglich. Die Dichtung 28 ist an der zum Innenraum 34 gerichteten Seite der Gehäuseaußenwand 12 angeordnet und dient der Abdichtung der Gehäuseöffnung 38.

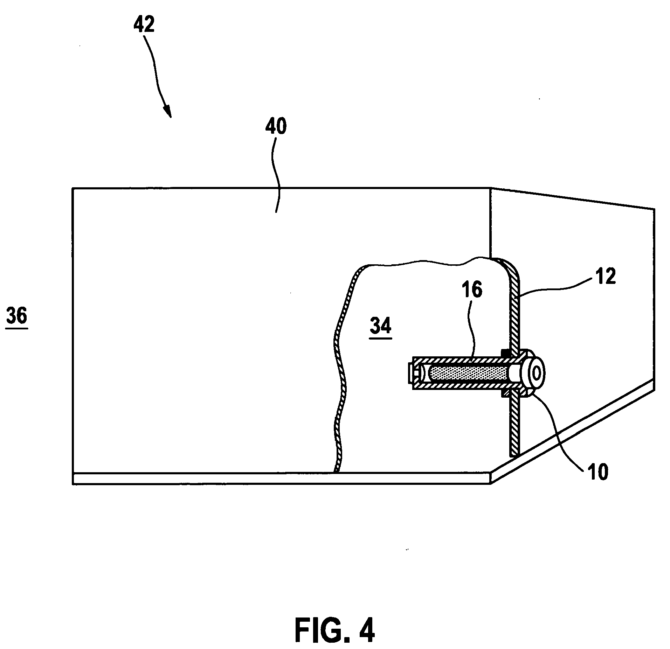

In Figur 4 ist beispielhaft und nicht beschränkend in skizzenhafter Schnittdarstellung ein erfindungsgemäßes Batteriesystem 42 mit der Trocknungseinrichtung 10 gezeigt. Die Trocknungseinrichtung 10 umfasst dabei eine Schutzkammer 32, welche durch eine Schutzhülse 16 im Innenraum 34 des Gehäuses 12 gebildet ist, entsprechend der zweiten Ausgestaltungsvariante der vorliegenden Erfindung.

## Patentansprüche

1. Trocknungseinrichtung (10) zur Minderung einer Feuchtigkeit eines in einem Innenraum (34) eines Gehäuses (40) befindlichen Gases, mit einer Trockenmittel (20) aufweisenden Trockenmittelpatrone (18), **dadurch gekennzeichnet, dass** die Trocknungseinrichtung (10) eine ins Gehäuse (40) eingebrachte oder einbringbare vom Innenraum (34) separierte und flüssigkeitsdicht und gasleitend mit dem Innenraum (34) verbundene Schutzkammer (32) aufweist, in der die Trockenmittelpatrone (18) angeordnet ist.

2. Trocknungseinrichtung (10) nach Anspruch 1, wobei die Schutzkammer (32) ein Druckausgleichselement (24) umfasst.

3. Trocknungseinrichtung (10) nach Anspruch 2, wobei eine im Gehäuse (40) an einer Gehäuseaußenwand (12) angeordnete Schutzabdeckung (14) und die Gehäuseaußenwand (12) die Schutzkammer (32) bilden und das Druckausgleichselement (24) in der Schutzabdeckung (14) angeordnet ist.

4. Trocknungseinrichtung (10) nach Anspruch 2, wobei eine durch eine Gehäuseöffnung (38) einer Gehäuseaußenwand (12) in das Gehäuse (40) eingebrachte oder einbringbare Schutzhülse (16) die Schutzkammer (32) bildet und das Druckausgleichselement (24) in der Schutzhülse (16) angeordnet ist.

5. Trocknungsvorrichtung (10) nach Anspruch 4, wobei die Schutzhülse (16) ein Außengewinde aufweist und in das Gehäuse (40) einschraubbar ist.

6. Trocknungseinrichtung (10) nach einem der vorherigen Ansprüche, wobei die Trocknungseinrichtung (10) eine Sensoreinheit (22) zur Ermittlung einer Aufnahmekapazität des Trockenmittels (20) aufweist.

7. Trocknungseinrichtung (10) nach Anspruch 6, wobei die Sensoreinheit (22) eine in Abhängigkeit der Aufnahmekapazität des Trockenmittels (20) variable Erscheinung aufweisende Anzeige umfasst.

8. Trocknungseinrichtung (10) nach Anspruch 6 oder 7, wobei die Sensoreinheit (22) einen elektronischen Sensor umfasst, der mit einem elektronischen Managementsystem verbindbar ist.

9. Batteriesystem (42) mit einem Gehäuse (40) und einem vom Gehäuse (40) im Wesentlichen eingeschlossenen Innenraum (34) und mit einer ins Gehäuse (40) eingebrachten Trocknungseinrichtung (10) nach einem der Ansprüche 1 bis 8.

10. Kraftfahrzeug, welches wenigstens ein Batteriesystem (42) gemäß Anspruch 9 umfasst, wobei das Batteriesystem (42) mit einem Antriebssystem des Kraftfahrzeugs verbunden ist.

## Claims

1. Drying device (10) for reducing a moisture content of a gas present in an internal space (34) of a housing (40), having a desiccant cartridge (18) comprising a desiccant (20), **characterized in that** the drying device (10) comprises a protective chamber (32), which is or which can be introduced into the housing (40) so that it is separated and liquid-tight in relation to the internal space (34) and has a gas-conducting connection to the internal space (34), and in which the desiccant cartridge (18) is arranged.

2. Drying device (10) according to Claim 1, wherein the protective chamber (32) comprises a pressure-equalizing element (24).

3. Drying device (10) according to Claim 2, wherein a protective cover (14) arranged in the housing (40) on a housing outer wall (12) and the housing outer wall (12) form the protective chamber (32), and the pressure-equalizing element (24) is arranged in the protective cover (14).

4. Drying device (10) according to Claim 2, wherein a protective sleeve (16), which is or which can be introduced into the housing (40) through a housing aperture (38) of a housing outer wall (12), forms the protective chamber (32) and the pressure-equalizing element (24) is arranged in the protective sleeve (16).

5. Drying device (10) according to Claim 4, wherein the protective sleeve (16) has an external thread and can be screwed into the housing (40).

6. Drying device (10) according to one of the preceding claims, wherein the drying device (10) comprises a sensor unit (22) for detecting an absorption capacity of the desiccant (20).

7. Drying device (10) according to Claim 6, wherein the sensor unit (22) comprises a display having an appearance that varies as a function of the absorption capacity of the desiccant (20).

8. Drying device (10) according to Claim 6 or 7, wherein the sensor unit (22) comprises an electronic sensor, which can be connected to an electronic management system.

9. Battery system (42) having a housing (40) and an internal space (34) substantially enclosed by the housing (40), and having a drying device (10) according to one of Claims 1 to 8 introduced into the housing (40).

10. Motor vehicle which comprises at least one battery system (42) according to Claim 9, wherein the battery system (42) is connected to a propulsion system of the motor vehicle.

## Revendications

1. Dispositif de séchage (10) destiné à réduire une humidité d'un gaz se trouvant dans un espace intérieur (34) d'un boîtier (40), comportant une cartouche de desséchant (18) contenant un desséchant (20), **caractérisé en ce que** le dispositif de séchage (10) comprend une chambre de protection (32) qui est placée ou peut être placée au sein du boîtier (40), séparée de l'espace intérieur (34) et reliée de manière étanche aux liquides et permettant une circulation des gaz à l'espace intérieur (34), chambre dans laquelle est disposée la cartouche de desséchant (18).

2. Dispositif de séchage (10) selon la revendication 1, dans lequel la chambre de protection (32) comprend un élément de compensation de pression (24).

3. Dispositif de séchage (10) selon la revendication 2, dans lequel un capot de protection (14) disposé dans le boîtier (40) sur une paroi extérieure (12) du boîtier et la paroi extérieure (12) du boîtier forment la chambre de protection (32) et dans lequel l'élément de compensation de pression (24) est disposé dans le capot de protection (14).

4. Dispositif de séchage (10) selon la revendication 2, dans lequel une gaine de protection (16) placée ou pouvant être placée dans le boîtier (40) à travers une ouverture de boîtier (38) d'une paroi extérieure (12) du boîtier forme la chambre de protection (32) et dans lequel l'élément de compensation de pression (24) est disposé dans la gaine de protection (16).

5. Dispositif de séchage (10) selon la revendication 4, dans lequel la gaine de protection (16) comporte un filetage extérieur et peut être vissée à l'intérieur du boîtier (40).

6. Dispositif de séchage (10) selon l'une quelconque des revendications précédentes, dans lequel le dispositif de séchage (10) comporte une unité de détection (22) destinée à déterminer une capacité d'absorption du desséchant (20).

7. Dispositif de séchage (10) selon la revendication 6, dans lequel l'unité de détection (22) comprend un affichage présentant un aspect variable en fonction de la capacité d'absorption du desséchant (20).

8. Dispositif de séchage (10) selon la revendication 6 ou 7, dans lequel l'unité de détection (22) comprend un capteur électronique qui peut être connecté à un système de gestion électronique.

9. Système de batterie (42) comportant un boîtier (40) et un espace intérieur (34) sensiblement délimité par le boîtier (40) et comportant un dispositif de séchage (10) selon l'une quelconque des revendications 1 à 8, pouvant être placé dans le boîtier (40).

10. Véhicule automobile comprenant au moins un système de batterie (42) selon la revendication 9, dans lequel le système de batterie (42) est connecté à un système d'entraînement du véhicule automobile.
